# EUROPEAN PATENT APPLICATION

(11) **EP 4 850 939 A1**
(43) Date of publication of application: **09.12.2026**
(21) Application number: 25767329.3
(22) Date of filing: 04.03.2025
(51) Int. Cl.: B60J 1/00, B32B 17/06, B32B 33/00, B32B 3/08, B60K 35/23, C03C 27/12

(54) **WINDSHIELD, HEAD-UP DISPLAY SYSTEM AND VEHICLE**

(30) Priority: 05.03.2024 CN 202410248597
(71) Applicant: Fuyao Glass Industry Group Co., Ltd., Fuqing, Fujian 350300 (CN)
(72) Inventor: LIN, Shituan, Fuzhou, Fujian 350300 (CN); LI, Jiaxin, Fuzhou, Fujian 350300 (CN); WANG, Xia, Fuzhou, Fujian 350300 (CN); ZENG, Dong, Fuzhou, Fujian 350300 (CN)
(74) Representative: Mewburn Ellis LLP
(86) International application number: PCT/CN2025/080375
(87) International publication number: WO 2025/185591

(57) **Abstract**

A windshield (210), a head-up display system (200), and a vehicle (1000) are provided. The windshield (210) has a first head-up display region (217). The windshield (210) includes outer glass (10), inner glass (20), an interlayer (30), and a dimming element (40). The inner glass (20) is spaced apart from and opposite to the outer glass (10). The interlayer (30) and the dimming element (40) are both located between the inner glass (20) and the outer glass (10). The interlayer (30) is connected between the inner glass (20) and the outer glass (10). The dimming element (40) is located in the first head-up display region (217). The dimming element (40) is configured to adjust a visible light transmittance of the first head-up display region (217). An adjustment range of the visible light transmittance of the first head-up display region (217) has an upper limit greater than or equal to 50%, and a lower limit less than or equal to 10%.

## Description

This application claims priority to Chinese Patent Application No. 202410248597.5, filed March 05, 2024 to China national intellectual property administration (CNIPA), and entitled "WINDSHIELD, HEAD-UP DISPLAY SYSTEM, AND VEHICLE", the entire disclosure of which is hereby incorporated by reference.

### TECHNICAL FIELD

This disclosure relates to the field of vehicle technology, and in particular, to a windshield, a head-up display system, and a vehicle.

### BACKGROUND

To improve the design diversity of vehicle interiors, most vehicle manufacturers integrate head-up display (HUD) functions into windshields, so that the windshields can display relevant information such as vehicle speed, engine speed, navigation, etc. In present head-up display solutions, an image is projected onto a lower region of the windshield. In this case, the height of a black band of the windshield is often increased to serve as a display background for the head-up display. However, excessively large height of the black band may limit field of view of a driver, affect the driver to judge a distance in front of the vehicle, and reduce the driving reliability of the vehicle.

### SUMMARY

The present disclosure provides a windshield, a head-up display system, and a vehicle, that can avoid the limitation of the head-up display on field of view of the driver, do not affect the driver to judge the distance in front of the vehicle, and ensure the driving reliability of the vehicle.

The present disclosure provides a windshield. The windshield has a primary viewing region and a first head-up display region. A visible light transmittance of the primary viewing region is greater than or equal to 70%. The first head-up display region is located on a bottom side of the primary viewing region. The windshield includes outer glass, inner glass, an interlayer, and a dimming element. The inner glass is spaced apart from and opposite to the outer glass. The interlayer and the dimming element are both located between the inner glass and the outer glass. The interlayer is connected between the inner glass and the outer glass. The dimming element is located in the first head-up display region. The dimming element is configured to adjust a visible light transmittance of the first head-up display region. An adjustment range of the visible light transmittance of the first head-up display region has an upper limit greater than or equal to 50%, and a lower limit less than or equal to 10%.

The adjustment range of the visible light transmittance of the first head-up display region has the upper limit greater than or equal to 70%, and the lower limit less than or equal to 5%.

The windshield further includes a masking layer. The masking layer includes a first masking portion located at a bottom edge of the windshield. The first head-up display region is located on one side of the first masking portion closer to the primary viewing region.

The first masking portion has a height less than or equal to 200 mm in a direction from a bottom side of the windshield toward a top side of the windshield.

The first head-up display region has a height less than or equal to 300 mm in a direction from a bottom side of the windshield toward a top side of the windshield.

The windshield further includes a P-polarized light enhanced reflection coating. The P-polarized light enhanced reflection coating is disposed on a surface of the inner glass facing away from the outer glass. The P-polarized light enhanced reflection coating at least partially covers the first head-up display region.

The windshield further includes a functional coating layer. The functional coating layer is disposed on a surface of the outer glass facing toward the inner glass or a surface of the inner glass facing toward the outer glass.

The windshield further has a sunshade region. The sunshade region is located on a top side of the primary viewing region. The windshield further includes a sunshade member. The sunshade member is located between the inner glass and the outer glass and in the sunshade region.

The sunshade member is a dimming element. The sunshade member is a dimming element. The sunshade member is configured to adjust a visible light transmittance of the sunshade region. An adjustment range of the visible light transmittance of the sunshade region has an upper limit greater than or equal to 50%, and a lower limit less than or equal to 10%.

A difference between the upper limit of the adjustment range of the visible light transmittance of the sunshade region and the upper limit of the adjustment range of the visible light transmittance of the first head-up display region is less than or equal to 5%. A difference between the lower limit of the adjustment range of the visible light transmittance of the sunshade region and the lower limit of the adjustment range of the visible light transmittance of the first head-up display region is less than or equal to 5%.

The windshield further includes a masking layer located at an edge of the windshield. The masking layer includes a second masking portion located on the top side of the primary viewing region. The sunshade region is located on one side of the second masking portion close to the primary viewing region and/or another side of the second masking portion away from the primary viewing region.

A minimum distance between the sunshade region and the primary viewing region is greater than or equal to 10 mm.

The windshield is a panoramic windshield. The windshield includes a first viewing area and a second viewing area. The primary viewing region is located in the first viewing area. The second viewing area is located on a top side of the first viewing area. In a direction from a bottom side of the windshield toward a top side of the windshield, the first viewing area has a first curvature, and the second viewing area has a second curvature. The first curvature is not equal to the second curvature. The first viewing area is connected to the second viewing area through a transition region with a third curvature. The third curvature is greater than each of the first curvature and the second curvature.

The interlayer includes a first head-up display portion. The first head-up display portion is located in the first head-up display region. In a direction from a bottom side of the windshield toward a top side of the windshield, the thickness of the first head-up display portion gradually decreases.

The present disclosure further provides a head-up display system. The head-up display system includes a projection apparatus and the windshield according to any one of the above. The projection apparatus is located on one side of the inner glass facing away from the outer glass. The projection apparatus is configured to emit first projection light toward the first head-up display region. The first projection light is reflected on a surface of the inner glass to form a virtual first projection image on one side of the outer glass facing away from the inner glass.

A top edge of the first projection image is located below a bottom edge of the primary viewing region.

A projection distance of the first head-up display region is greater than or equal to 1 m and less than or equal to 2.5 m.

Projection light of the projection apparatus includes S-polarized light and P-polarized light.

In the projection light of the projection apparatus, the S-polarized light accounts for 0% to 80%, and the P-polarized light accounts for 20% to 100%.

A projection angle of the projection apparatus ranges from 42 degrees to 85 degrees.

The windshield further has a second head-up display region. The second head-up display region is located in the primary viewing region. The projection apparatus is further configured to emit second projection light toward the second head-up display region. The second projection light is reflected on the surface of the inner glass to form a virtual second projection image on the side of the outer glass facing away from the inner glass.

A proportion of P-polarized light in the second projection light is different from a proportion of P-polarized light in the first projection light.

A projection distance of the second head-up display region is greater than or equal to 5 m and less than or equal to 10 m.

The projection apparatus is configured to provide color compensation for color of projection light. A color compensation value of the projection light of the projection apparatus is equal to a color deviation value of light reflected on the surface of the inner glass.

The present disclosure further provides a vehicle. The vehicle includes a vehicle body and the head-up display system according to any one of the above. The head-up display system is mounted on the vehicle body.

In the windshield illustrated in the present disclosure, the dimming element can adjust the visible light transmittance of the first head-up display region. When the head-up display function of the first head-up display region is activated, for example, when the vehicle is moving, the dimming element can adjust the visible light transmittance of the first head-up display region to be less than or equal to 10%, and the first head-up display region is in a dark state, so that the first head-up display region can serve as a display background for head-up display to replace the black band used as the display background in the related art. Therefore, the first head-up display region in the dark state can provide a high contrast for the display image, thereby ensuring the sharpness of the display image. When the head-up display function of the first head-up display region is deactivated, for example, when the vehicle is parked, the dimming element can adjust the visible light transmittance of the first head-up display region to be greater than or equal to 50%, and the first head-up display region is in a transparent state. Therefore, the windshield can not only provide a complete field of view for the driver and passengers, but also not affect the appearance aesthetics of the vehicle. In other words, in the embodiments, by using the first head-up display region to replace the black band in the related art as the display background for head-up display, the limitation of head-up display on the field of view of the driver can be avoided, a wider field of view can be provided for the driver, and judgment of the distance in front of the vehicle made by the driver is not affected, thereby enduing the driving reliability of the vehicle and also improving the appearance aesthetics of the vehicle.

### BRIEF DESCRIPTION OF THE DRAWINGS

To more clearly illustrate the technical solutions of the embodiments of the present disclosure, the drawings required for the embodiments of the present disclosure are described below.
FIG. 1 is a schematic structural view of a vehicle provided in a first embodiment of the present disclosure.
FIG. 2 is a schematic structural view of a head-up display system in the vehicle illustrated in FIG. 1.
FIG. 3 is a schematic planar structural view of a windshield in the vehicle illustrated in FIG. 1.
FIG. 4 is a schematic cross-sectional structural view of the windshield illustrated in FIG. 3, taken along Line I-I, in a first implementation.
FIG. 5 is a schematic cross-sectional structural view of the windshield illustrated in FIG. 3, taken along Line II-II, in a first implementation.
FIG. 6 is a schematic cross-sectional structural view of the windshield illustrated in FIG. 3, taken along Line II-II, in a second implementation.
FIG. 7 is a schematic cross-sectional structural view of the windshield illustrated in FIG. 3, taken along Line II-II, in a third implementation.
FIG. 8 is a schematic planar structural view of a windshield in a vehicle provided in a second embodiment of the present disclosure.

Description of reference signs of the accompanying drawings: vehicle 1000, vehicle body 100, head-up display system 200, windshield 210, projection apparatus 220, eye 2000, viewing area 211, non-viewing area 212, primary viewing region 213, first non-viewing region 214, second non-viewing region 215, third non-viewing region 216, first head-up display region 217, second head-up display region 218, sunshade region 219, outer glass 10, inner glass 20, interlayer 30, dimming element 40, masking layer 70, P-polarized light enhanced reflection coating 80, first surface 101, second surface 102, third surface 201, fourth surface 202, second head-up display portion 32, functional coating layer 90, first viewing area 211a, second viewing area 211b, first non-viewing area 212a, and second non-viewing area 212b.

### DETAILED DESCRIPTION

The technical solutions in the embodiments of the present disclosure are clearly and completely described below with reference to the accompanying drawings in the embodiments of the present disclosure. Obviously, the described embodiments are only a part of the embodiments of the present disclosure, not all of the embodiments. Based on the embodiments in the present disclosure, all other embodiments obtained by those of ordinary skill in the art without creative work shall fall within the protection scope of the present disclosure.

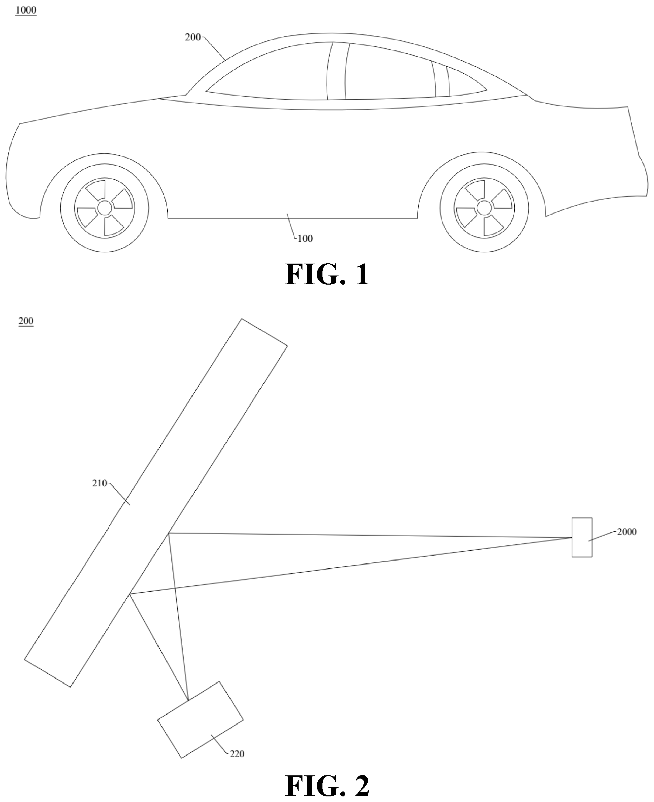

Reference can be made to FIG. 1 and FIG. 2, where FIG. 1 is a schematic structural view of a vehicle 1000 provided in a first embodiment of the present disclosure, and FIG. 2 is a schematic structural view of a head-up display system 200 in the vehicle 1000 illustrated in FIG. 1.

The first embodiment of the present disclosure provides a vehicle 1000. The vehicle 1000 includes a vehicle body 100 and a head-up display system 200. The head-up display system 200 is mounted on the vehicle body 100. The head-up display system 200 includes a windshield 210 and a projection apparatus 220. The windshield 210 is mounted on the front side of the vehicle body 100. The projection apparatus 220 is mounted inside the vehicle body 100. The projection apparatus 220 can emit projection light toward the windshield 210. The projection light can be reflected on the windshield 210. The light reflected by the windshield 210 can enter eyes 2000 of the driver and passengers, thereby realizing the head-up display of the head-up display system 200.

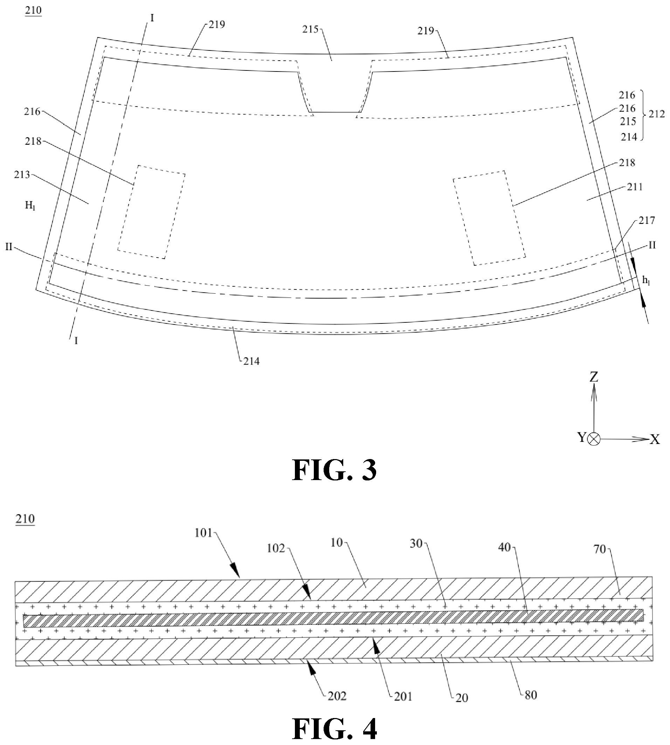

Reference can be made to FIG. 3, which is a schematic planar structural view of a windshield 210 in the vehicle 1000 illustrated in FIG. 1. For convenience of description, a height direction of the windshield 210 is defined as a Z-axis direction, a length direction of the windshield 210 is defined as an X-axis direction, and a thickness direction of the windshield 210 is defined as a Y-axis direction, where the X-axis direction, Y-axis direction, and Z-axis direction are perpendicular to one another.

In this embodiment, the windshield 210 is a non-panoramic windshield. The windshield 210 has a viewing area 211 and a non-viewing area 212. The viewing area 211 is located in the middle of the windshield 210. The viewing area 211 includes a primary viewing region 213. The primary viewing region 213 is located in the middle of the viewing area 211. A visible light transmittance of the primary viewing region 213 is greater than or equal to 70%. It may be noted that when describing the windshield 210 in the present disclosure, the viewing area 211 mentioned refers to a region of the windshield 210 through which the driver and passengers can see the external conditions of the vehicle 1000, and the primary viewing region 213 mentioned refers to a region of the windshield 210 that the driver mainly observes during the driving of the vehicle 1000.

The non-viewing area 212 is located at an edge of the windshield 210 and is located around the viewing area 211. The non-viewing area 212 includes a first non-viewing region 214, a second non-viewing region 215 and two third non-viewing regions 216. The first non-viewing region 214 is located at a bottom edge of the windshield 210 and at the bottom side of the viewing area 211. Exemplarily, in a direction from the bottom side of the windshield 210 to the top side of the windshield 210, the height h1 of the first non-viewing region 214 is less than or equal to 200 mm. In some embodiments, in the direction from the bottom side of the windshield 210 to the top side of the windshield 210, the height h1 of the first non-viewing region 214 is less than or equal to 150 mm. The second non-viewing region 215 is located at a top edge of the windshield 210 and at the top side of the viewing area 211, and is spaced apart from the first non-viewing region 214. The two third non-viewing regions 216 are both connected between the first non-viewing region 214 and the second non-viewing region 215, and are spaced apart from each other in the X-axis direction.

It may be noted that the orientation terms such as "top" and "bottom" involved in the present disclosure are described with reference to the orientation illustrated in FIG. 3, where a direction toward the positive Z-axis is referred to as the "top" and a direction toward the negative Z-axis is referred to as the "bottom". These terms do not indicate or imply that the referred device or element must have a specific orientation, or be constructed and operated in a specific orientation, and therefore should not be construed as limiting the present disclosure.

In addition, the windshield 210 has a first head-up display region 217, a second head-up display region 218, a camera region (not marked in the figure), and a sunshade region 219. The first head-up display region 217 is located at the bottom of the windshield 210. Part of the first head-up display region 217 overlaps with the viewing area 211, and the other part of the first head-up display region 217 overlaps with the non-viewing area 212. In some other embodiments, the first head-up display region 217 may completely overlap with the viewing area 211 without overlapping with the non-viewing area 212, which is not specifically limited in the present disclosure.

Specifically, the first head-up display region 217 is located on the bottom side of the primary viewing region 213 and on the top side of the first non-viewing region 214. Exemplarily, the bottom of the first head-up display region 217 may overlap with the first non-viewing region 214, and the two opposite sides of the first head-up display region 217 in the X-axis direction may overlap with the two third non-viewing regions 216 respectively. It may be noted that the top edge of the first head-up display region 217 may be flush with the bottom edge of the primary viewing region 213, or the top edge of the first head-up display region 217 may be located on the bottom side of the bottom edge of the primary viewing region 213.

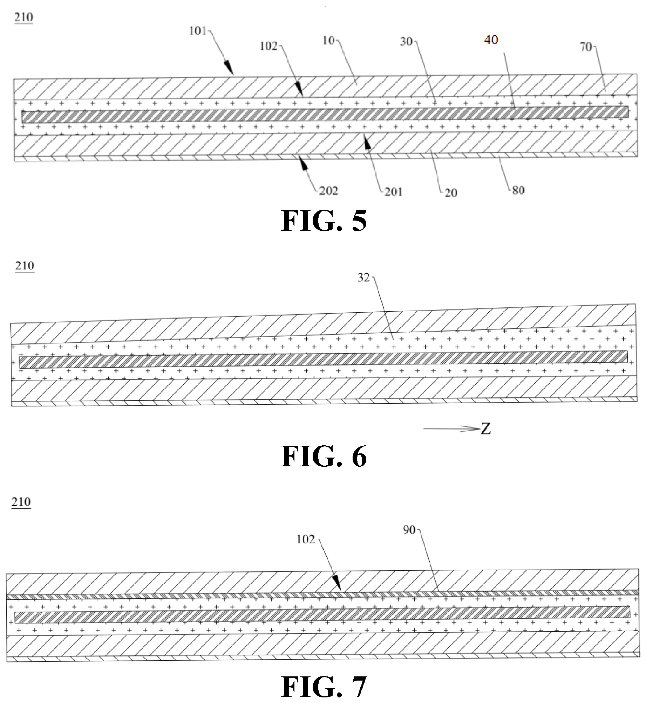

The projection apparatus 220 can emit first projection light toward the first head-up display region 217. The first projection light can be reflected on the surface of the inner glass 20 (as illustrated in FIG. 4 and FIG. 5) to form a virtual first projection image on the side of the outer glass 10 (as illustrated in FIG. 4 and 5) facing away from the inner glass 20. The first head-up display region 217 can display information shown on the instrument panel such as the speed of the vehicle 1000, engine speed, navigation, and time. Exemplarily, the projection distance L1 of the first head-up display region 217 ranges from 1 m to 2.5 m. The projection distance L1 refers to a distance between eyes 2000 region of a passenger located inside the vehicle 1000 and the virtual first projection image formed on the side of the outer glass 10 facing away from the inner glass 20 after the first projection light emitted by the projection apparatus 220 to the first head-up display region 217 is reflected on the surface of the inner glass 20.

The width W1 of the first projection image ranges from 1000 mm to 1350 mm. In the direction from the bottom side of the windshield 210 to the top side of the windshield 210, the height H1 of the first projection image is less than or equal to 300 mm. In some embodiments, in the direction from the bottom side of the windshield 210 to the top side of the windshield 210, the height H1 of the first projection image from the bottom side of the windshield 210 to the top side of the windshield 210 ranges from 100 mm to 250 mm.

It can be understood that the information displayed in the first head-up display region 217 is highly important for the driving safety of the vehicle 1000. If the first head-up display region 217 is used to replace the instrument panel in the existing vehicle 1000 and serves as the only display region for displaying instrument panel information, the requirements for the clarity and contrast of the display image are relatively high, so that the driver can clearly identify the displayed information under any environmental conditions.

The second head-up display region 218 is located in the middle of the windshield 210 and is spaced apart from the first head-up display region 217. Specifically, the second head-up display region 218 is located in the viewing area 211. The second head-up display region 218 is located in the primary viewing region 213. In this embodiment, there are two second head-up display regions 218. In the X-axis direction, the two second head-up display regions 218 are spaced apart from each other.

The projection apparatus 220 can emit second projection light toward the second head-up display region 218. The second projection light can be reflected on the surface of the inner glass (as illustrated in FIG. 4 and FIG. 5) to form a virtual second projection image on the side of the outer glass 10 (as illustrated in FIG. 4 and FIG. 5) facing away from the inner glass 20. The second projection light and the first projection light are emitted from different types of light sources, that is, the proportion of P-polarized light in the second projection light is different from the proportion of P-polarized light in the first projection light. For example, the proportion of P-polarized light in the first projection light is 80% and the proportion of S-polarized light in the first projection light is 20%, while the proportion of P-polarized light in the second projection light is 20% and the proportion of S-polarized light in the second projection light is 80%. Alternatively, the proportion of P-polarized light in the first projection light is 90% and the proportion of S-polarized light in the first projection light is 10%, while the proportion of P-polarized light in the second projection light is 30% and the proportion of S-polarized light in the second projection light is 70%. In addition, in other embodiments of the present disclosure, other proportions of P-polarized light may be adopted for the first projection light and the second projection light, and the present disclosure is not specifically limited thereto. The second head-up display region 218 can display interaction information between the vehicle 1000 and the road surface, and the display image is directly projected in front of the vehicle 1000. Exemplarily, the projection distance L2 of the second head-up display region 218 ranges from 5 m to 10 m. The projection distance L2 refers to a distance between eyes 2000 region of a passenger located inside the vehicle 1000 and the virtual second projection image formed on the side of the outer glass 10 facing away from the inner glass 20 after the second projection light emitted by the projection apparatus 220 to the second head-up display region 218 is reflected on the surface of the inner glass 20.

It can be understood that when the projection light source of the projection apparatus 220 remains unchanged, the darker the background of the projection, the better the contrast between the projection image and the background, and the higher the sharpness of the projection image, with more distinct colors. Compared with the first head-up display region 217, the information displayed in the second head-up display region 218 has a relatively small impact on the driving safety of the vehicle 1000, and the background against which the projection image is presented is more complex. Therefore, the image displayed in the second head-up display region 218 may be allowed to undergo partial distortion under extreme conditions, such as strong ambient light.

Both the camera region and the sunshade region 219 are located at the top of the windshield 210 and are spaced apart from the second head-up display region 218. Specifically, both the camera region and the sunshade region 219 are located at the top of the viewing area 211 and are spaced apart from the primary viewing region 213. The camera region overlaps with the viewing area 211. It may be noted that the camera region refers to a region on the windshield 210 corresponding to a driving recorder of the vehicle 1000.

Part of the sunshade region 219 overlaps with the viewing area 211, and the other part of the sunshade region 219 overlaps with the non-viewing area 212. Exemplarily, the top of the sunshade region 219 overlaps with the second non-viewing region 215, and one side of the sunshade region 219 in the X-axis direction can overlap with one third non-viewing region 216. There are two sunshade regions 219. In the X-axis direction, the two sunshade regions 219 are respectively located on opposite sides of the camera region and both are spaced apart from the camera region. Exemplarily, the minimum distance between the sunshade region 219 and the primary viewing region 213 is greater than or equal to 10 mm. In some embodiments, the minimum distance between the sunshade region 219 and the primary viewing region 213 is greater than or equal to 25 mm.

Reference can be made to FIG. 4 and FIG. 5 together, where FIG. 4 is a schematic cross-sectional structural view of the windshield 210 illustrated in FIG. 3, taken along Line I-I, in a first implementation, and FIG. 5 is a schematic cross-sectional structural view of the windshield 210 illustrated in FIG. 3, taken along Line II-II, in a first implementation. "Taken along Line I-I" means sectioned along a plane in which Line I-I is located, and similar descriptions in the present disclosure can be understood in the same manner.

The windshield 210 includes outer glass 10, inner glass 20, an interlayer 30, a dimming element 40, a sunshade member, a masking layer 70, and a P-polarized light enhanced reflection coating 80. In the thickness direction of the windshield 210, the outer glass 10 is spaced apart from and opposite to the inner glass 20. The outer glass 10 is a component of the windshield 210 that faces away from the projection apparatus 220. The inner glass 20 is a component of the windshield 210 that faces toward the projection apparatus 220. The interlayer 30, the dimming element 40, and the sunshade member are all located between the outer glass 10 and the inner glass 20. Exemplarily, both the dimming element 40 and the sunshade member can be embedded inside the interlayer 30.

The outer glass 10 has a first surface 101 and a second surface 102. In the thickness direction of the outer glass 10, the first surface 101 faces away from the second surface 102. The first surface 101 is a surface of the outer glass 10 facing away from the inner glass 20. The second surface 102 is a surface of the outer glass 10 facing toward the inner glass 20. The inner glass 20 has a third surface 201 and a fourth surface 202. In the thickness direction of the inner glass 20, the third surface 201 faces away from the fourth surface 202. The third surface 201 is a surface of the inner glass 20 facing toward the outer glass 10. The fourth surface 202 is a surface of the inner glass 20 facing away from the outer glass 10. Both the outer glass 10 and the inner glass 20 are clear glass raw sheets or ultra clear glass raw sheets.

The interlayer 30 is bonded between the outer glass 10 and the inner glass 20. Specifically, the interlayer 30 is bonded between the second surface 102 and the third surface 201 to realize the assembly between the outer glass 10 and the inner glass 20. The interlayer 30 is in a semi-solid and semi-liquid state and can flow between the outer glass 10 and the inner glass 20. Exemplarily, the material of the interlayer 30 may include, but is not limited to, polyvinyl butyral (PVB), ethylene-vinyl acetate copolymer (EVA), polyolefin thermoplastic elastomer (POE), polycarbonate (PC), or polymethyl methacrylate (PMMA).

The masking layer 70 is disposed in an edge region of the second surface 102. The masking layer 70 is arranged around the viewing area 211 and located in the non-viewing area 212. Exemplarily, the masking layer 70 is made of black ink. The masking layer 70 includes a first masking portion, a second masking portion, and two third masking portions. The first masking portion is located at the bottom edge of the windshield 210 and located in the first non-viewing region 214. The first head-up display region 217 is located on one side of the first masking portion closer to the primary viewing region 213. The second masking portion is located at the top of the windshield 210 and located in the second non-viewing region 215, and is spaced apart from the first masking portion. The sunshade region 219 is located on one side of the second masking portion closer to the primary viewing region 213. The two third masking portions are connected between the first masking portion and the second masking portion, are spaced apart from each other, and are respectively located in the two third non-viewing regions 216. Exemplarily, in the direction from the bottom side of the windshield 210 to the top side of the windshield 210, the height h2 of the first masking portion is equal to h1 and is less than or equal to 200 mm. In some embodiments, in the direction from the bottom side of the windshield 210 to the top side of the windshield 210, the height h2 of the first masking portion is less than or equal to 150 mm. It may be noted that the region of the windshield 210 in which the masking layer 70 is located is defined as the non-viewing area 212, and the masking layer 70 may also be referred to as a black band.

The first head-up display region 217 is located within the region in which the dimming element 40 is located. The dimming element 40 can adjust the visible light transmittance of the first head-up display region 217. The adjustment range of the visible light transmittance of the first head-up display region 217 has an upper limit greater than or equal to 50%, and a lower limit less than or equal to 10%. In other words, the visible light transmittance of the first head-up display region 217 can be adjusted up to a maximum in the range of 0% to 100% and down to a minimum in the range of 10% to 50%. Specifically, the adjustment range of the visible light transmittance of the first head-up display region 217 may be 1% to 99%, or 1% to 80%, or 1% to 70%, or 5% to 50%, etc. In some embodiments, the adjustment range of the visible light transmittance of the first head-up display region 217 has the upper limit greater than or equal to 70%, and the lower limit less than or equal to 5%. The dimming element 40 includes, but is not limited to, a liquid crystal (LC) dye coating, an electrochromism (EC) coating, a suspended particle device (SPD) coating, and a black polymer dispersed liquid crystal (PDLC) coating, etc. Exemplarily, when the dimming element 40 includes a black PDLC coating, the mass percentage of the black dye is 5%. The dimming element 40 has an on state and an off state. When the dimming element 40 is in the on state, the dimming element 40 is in a dark state. When the dimming element 40 is in the off state, the dimming element 40 is in a transparent state.

In the first head-up display region 217 of the windshield 210 according to this embodiment, the dimming element 40 can adjust the visible light transmittance of the first head-up display region 217, so that the first head-up display region 217 can be switched between the dark state and the transparent state. When the head-up display function of the first head-up display region 217 is activated, for example, when the vehicle 1000 is moving, the dimming element 40 can adjust the visible light transmittance of the first head-up display region 217 to be less than or equal to 5%, and the first head-up display region 217 is in the dark state, so that the first head-up display region 217 can serve as the display background for the head-up display to replace the black band used as the display background in the related art. Therefore, the dimming element 40 in the dark state can provide a high contrast for the display image, thereby ensuring the sharpness of the display image.

When the head-up display function of the first head-up display region 217 is deactivated, for example, when the vehicle 1000 is parked, the dimming element 40 can adjust the visible light transmittance of the first head-up display region 217 to be greater than or equal to 70%, and the first head-up display region 217 is in a transparent state. Therefore, the windshield 210 can not only provide a complete field of view for the driver and passengers, but also not affect the appearance aesthetics of the vehicle 1000. In other words, in this embodiment, by using the first head-up display region 217 to replace the black band in the related art as the display background for the head-up display, the limitation of the head-up display on the field of view of the driver can be avoided, a wider field of view can be provided for the driver, and judgment of the distance in front of the vehicle made by the driver is not affected, thereby ensuring the driving reliability of the vehicle 1000 and also improving the appearance aesthetics of the vehicle 1000.

In some embodiments, there may be one sunshade member and the sunshade member covers the entire sunshade region 219. In some embodiments, there may be two sunshade members, and the two sunshade members are respectively located in the two sunshade regions 219. In this embodiment, the sunshade member may be a dimming element, and can adjust the visible light transmittance of the sunshade region 219. The adjustment range of the visible light transmittance of the sunshade region 219 has an upper limit greater than or equal to 50%, and a lower limit is less than or equal to 10%. In some embodiments, the adjustment range of the visible light transmittance of the sunshade region 219 has the upper limit greater than or equal to 70%, and the lower limit less than or equal to 5%. In other words, the visible light transmittance of the sunshade region 219 can be adjusted up to a maximum in the range of 0% to 100% and down to a minimum in the range of 10% to 50%. Specifically, the adjustment range of the visible light transmittance of the sunshade region 219 may be 1% to 99%, or 1% to 80%, or 1% to 70%, or 5% to 50%, etc. The sunshade includes, but is not limited to, a LD dye coating, an EC coating, an SPD coating, and a black PDLC coating, etc. Exemplarily, when the sunshade member includes a black PDLC coating, the mass percentage of the black dye is 5%. In some other embodiments, the sunshade member may be a conventional sunshade member that can play a sunshade role, such as a black ink layer, which is not specifically limited in the present disclosure.

In some embodiments, a difference between the upper limit of the adjustment range of the visible light transmittance of the sunshade region 219 and the upper limit of the adjustment range of the visible light transmittance of the first head-up display region 217 is less than or equal to 5%. A difference between the lower limit of the adjustment range of the visible light transmittance of the sunshade region 219 and the lower limit of the adjustment range of the visible light transmittance of the first head-up display region 217 is less than or equal to 5%. In some further embodiments, the difference between the upper limit of the adjustment range of the visible light transmittance of the sunshade region 219 and the upper limit of the adjustment range of the visible light transmittance of the first head-up display region 217 may be 0%, 2%, 3%, 4%, 5%, and the difference between the lower limit of the adjustment range of the visible light transmittance of the sunshade region 219 and the lower limit of the adjustment range of the visible light transmittance of the first head-up display region 217 may be 0%, 2%, 3%, 4%, 5%.

In some embodiments, the sunshade member may be made of the same material as the dimming element 40, so as to adjust the visible light transmittance of the sunshade region 219. In this case, the difference between the upper limit of the adjustment range of the visible light transmittance of the sunshade region 219 and the upper limit of the adjustment range of the visible light transmittance of the first head-up display region 217 is 0, and the difference between the lower limit of the adjustment range of the visible light transmittance of the sunshade region 219 and the lower limit of the adjustment range of the visible light transmittance of the first head-up display region 217 is also 0. Therefore, the sunshade region 219 and the first head-up display region 217 can keep the up-and-down visual effect consistent when in the brightest state or the darkest state.

In addition, in some embodiments, the sunshade member may be made of a different material from the dimming element 40, so as to adjust the visible light transmittance of the sunshade region 219. When the sunshade member and the dimming element 40 use different materials to adjust the visible light transmittance, the difference between the upper limit of the adjustment range of the visible light transmittance of the sunshade region 219 and the upper limit of the adjustment range of the visible light transmittance of the first head-up display region 217 is less than or equal to 5%, and the difference between the lower limit of the adjustment range of the visible light transmittance of the sunshade region 219 and the lower limit of the adjustment range of the visible light transmittance of the first head-up display region 217 is also less than or equal to 5%. That is, the difference in light transmittance between the sunshade region 219 and the first head-up display region 217 is less than or equal to 5% when in the brightest or darkest state.

In the sunshade region 219 of the windshield 210 according to this embodiment, the dimming element is used as the sunshade member to replace the conventional sunshade member in the related art. The sunshade member can adjust the visible light transmittance of the sunshade region 219, so that the sunshade region 219 can be switched between the dark state and the transparent state. The sunshade member can adjust the visible light transmittance of the sunshade region 219 to be less than or equal to 10%, so that the sunshade region 219 is in the dark state, and the sunshade region 219 in the dark state can absorb light from outside the vehicle 1000 to play a sunshade role. The sunshade can also adjust the visible light transmittance of the sunshade region 219 to be greater than or equal to 50%, so that the sunshade region 219 is in the transparent state, and the windshield 210 can not only provide a complete field of view for the driver and passengers, but also not affect the appearance aesthetics of the vehicle 1000. In other words, in this embodiment, by using the sunshade member to replace the sunshade device in the related art to play a sunshade role, the limitation of the sunshade device in the related art on the field of view of the driver can be avoided, a wider field of view can be provided for the driver, and judgment of the distance in front of the vehicle made by the driver is not affected, thereby ensuring the driving reliability of the vehicle 1000 and also improving the appearance aesthetics of the vehicle 1000.

The P-polarized light enhanced reflection coating 80 is disposed on the fourth surface 202. The P-polarized light enhanced reflection coating 80 at least covers the first head-up display region 217. Specifically, the P-polarized light enhanced reflection coating 80 covers the fourth surface 202 and is disposed facing toward a projection surface of the projection apparatus 220. In this embodiment, the P-polarized light enhanced reflection coating 80 may be a nano coating. The nano coating can increase the P-light reflectivity of the fourth surface 202, so as to reduce the ghosting in the first head-up display region 217 and the second head-up display region 218. When the driver or passenger wears polarized glasses, the driver or passenger can still see the display images on the first head-up display region 217 and the second head-up display region 218 clearly. In some other embodiments, the P-polarized light enhanced reflection coating 80 may be disposed on the surface of the inner glass 20 facing toward the outer glass 10.

The projection apparatus 220 is located on the side of the inner glass 20 facing away from the outer glass 10, and is spaced apart from and faces toward the surface of the inner glass 20 facing away from the outer glass 10. Specifically, the projection apparatus 220 is located on the side of the P-polarized light enhanced reflection coating 80 facing away from the inner glass 20, and is spaced apart from and faces towards the P-polarized light enhanced reflection coating 80. The projection light of the projection apparatus 220 includes S-polarized light and P-polarized light. Exemplarily, the proportion of S-polarized light ranges from 0% to 80%, and the proportion of P-polarized light ranges from 20% to 100%. The proportion ratio between P-polarized light and S-polarized light may range from 40%:60% to 60%:40%, or the proportion ratio between P-polarized light and S-polarized light may range from 95%:5% to 100%:0%.

In this embodiment, a projection angle of the projection apparatus 220 ranges from 42 degrees to 85 degrees. In some embodiments, the projection angle of the projection apparatus 220 ranges from 42 degrees to 72 degrees. It may be noted that the projection angle of the projection apparatus 220 is close to the Brewster's angle of the glass (about 56.5 degrees). For ordinary glass, P-polarized light is hardly reflected within this incident angle range, and the reflectivity of S-polarized light is approximately between 10% and 15%.

In this embodiment, the design of the P-polarized light enhanced reflection coating 80 significantly increases the reflectivity of P-polarized light. Since the acquisition of linearly polarized light results in the loss of part of the light energy, under the condition that the power of the projection apparatus 220 is constant, the windshield 210 in the present disclosure has high reflectivity for both P-polarized light and S-polarized light, with less energy loss, so that the resulting projection image naturally has higher brightness and is visually clearer. In this case, the high image quality can be achieved without designing the dimming element 40 into a multi-layer structure, thereby helping to reduce the cost of the windshield 210. The total reflectivity of the first head-up display region 217 for P-polarized light and S-polarized light is greater than or equal to 4%. When the head-up display function of the first head-up display region 217 is activated, the dimming element 40 is in the dark state, and the projection apparatus 220 projects light, preferably including mixed light of P-polarized light and S-polarized light, so that at this time, a relatively sharp image can be obtained on the first head-up display region 217, and the driver and passengers can observe the display image while wearing polarized glasses. When the head-up display function of the first head-up display region 217 is deactivated, for example, when the vehicle 1000 is in a parked state, the dimming element 40 is in the transparent state, the projection apparatus 220 is powered off, the windshield 210 can provide a better view for passengers, and the first head-up display region 217 does not affect the appearance of the vehicle 1000 at this time.

It may be noted that when the projection light of the projection apparatus 220 is reflected by the dimming element 40, the color of the projection light changes. For example, if the color of the projection light of the projection apparatus 220 is (R0, G0, B0), the color after reflection by the dimming element 40 becomes (R1, G1, B1), where R1≠R0, G1≠G0, and B1≠B0. As a result, the color of the display image on the first head-up display region 217 deviates from the color of the actual projection image. To ensure the color accuracy of the image displayed by the projection apparatus 220 on the first head-up display region 217, color compensation can be performed on the color of the projection light of the projection apparatus 220. For example, if the originally designed color of the projection light is (R0, G0, B0), and the color compensation values of the projection light of the projection apparatus 220 are ΔR, ΔG, and ΔB, the color of the projection light of the projection apparatus 220 is compensated to (R2, G2, B2), where R2=R0+ΔR, G2=G0+ΔG, and B2=B0+ΔB. Accordingly, the color of the projection light after reflection by the dimming element 40 becomes (R3, G3, B3), where R3=R0, G3=G0, and B3=B0, thereby ensuring that the color of the display image on the first head-up display region 217 is consistent with the color of the designed projection image. The color deviation values of the projection light after being reflected on the surface of the inner sheet glass are R2-R3, G2-G3, and B2-B3.

Next, taking the projection angle at which the projection apparatus 220 projects onto the first head-up display region 217 being 65 degrees as an example, the reflectivities of the fourth surface 202 are described for cases where the proportions of P-polarized light and S-polarized light in the projection light of the projection apparatus 220 are different.

**Table 1**

| Incident angle | Solutions | Reflectivity of fourth surface |
|---|---|---|
| | 100% P-polarized light | 20% |
| | 20% P-polarized light +80% S-polarized light | 21.8% |
| | 30% P-polarized light +70% S-polarized light | 21.6% |
| 65 degrees | 40% P-polarized light +60% S-polarized light | 21.3% |
| | 50% P-polarized light +50% S-polarized light | 21.1% |
| | 60% P-polarized light +40% S-polarized light | 20.9% |
| | 70% P-polarized light +30% S-polarized light | 20.7% |
| | 80% P-polarized light +20% S-polarized light | 20.4% |
| | 90% P-polarized light +10% S-polarized light | 20.2% |

As can be seen from Table 1, compared with the case where the projection apparatus 220 uses 100% P-polarized light, when the projection apparatus 220 uses mixed light including P-polarized light and S-polarized light, the reflectivity of the fourth surface 202 is increased. In other words, the energy loss of the projection light source of the projection apparatus 220 is reduced, and the mixed light of P-polarized light and S-polarized light improves the energy utilization rate of the projection light source.

Reference can be made to FIG. 3 and FIG. 6, where FIG. 6 is a schematic cross-sectional structural view of the windshield 210 illustrated in FIG. 3, taken along Line II-II, in a second implementation.

The windshield 210 illustrated in this implementation is different from the windshield 210 illustrated in the first implementation described above in that, the interlayer 30 includes a first head-up display portion (not shown) and two second head-up display portions 32, the first head-up display portion is located in the first head-up display region 217, and the two second head-up display portions 32 are respectively located in the two second head-up display regions 218, and both are spaced apart from the first head-up display portion. In the direction from the top side of the windshield 210 to the bottom side of the windshield 210, the thickness of each of the first head-up display portion and the second head-up display portion 32 gradually decreases. Exemplarily, the cross-section of each of the first head-up display portion and the second head-up display portion 32 along the YZ plane has a wedge-shaped profile. In some other embodiments, in the direction from the top side of the windshield 210 to the bottom side of the windshield 210, the cross-section of the interlayer 30 along the YZ plane has a wedge-shaped profile.

It may be understood that when the projection light of the projection apparatus 220 includes P-polarized light and S-polarized light, depending on the different optical properties such as light transmittance and reflectivity of the dimming element, the S-polarized light may undergo multiple reflections to varying degrees at the dimming element and the fourth surface 202. The gradually varying thicknesses of the first head-up display portion and the second head-up display portion 32 can correct the ghosting caused by multiple reflections of the S-polarized light, thereby further improving the brightness of the first head-up display region 217 and the second head-up display region 218. The reflectivity of the second head-up display region 218 is greater than or equal to 8%.

It may be noted that due to the differences in the optical path design of the first head-up display region 217 and the second head-up display region 218, the wedge-shaped angles used to eliminate ghosting in the first head-up display region 217 and the second head-up display region 218 may also be different. Exemplarily, the wedge-shaped angles of the first head-up display portion and the second head-up display portion 32 are different to eliminate ghosting in the first head-up display region 217 and the second head-up display region 218 respectively. In addition, each of the first head-up display portion and the second head-up display portion 32 may include multiple layers of wedge-shaped coatings (not shown). In the thickness direction of the windshield 210, the multiple layers of wedge-shaped coatings are stacked in sequence to increase the brightness of the first head-up display region 217 and the second head-up display region 218.

Reference can be made to FIG. 3 and FIG. 7, where FIG. 7 is a schematic cross-sectional structural view of the windshield 210 illustrated in FIG. 3, taken along Line II-II, in a third implementation.

The windshield 210 illustrated in this implementation is different from the windshields 210 illustrated in the first and second implementations described above in that, the windshield 210 further includes a functional coating layer 90, and the functional coating layer 90 is disposed on the second surface 102. Specifically, the functional coating layer 90 covers the second surface 102. In some embodiments, the functional coating layer 90 is disposed on the third surface 201. Exemplarily, the functional coating layer 90 includes, but is not limited to, an infrared barrier coating. The infrared barrier coating may be an infrared reflecting coating. The infrared reflecting coating includes at least one functional layer and at least two dielectric layers, with each functional layer located between two adjacent dielectric layers. The infrared reflecting coating can reflect infrared rays, achieving a lower total solar energy transmittance Tts, so that the anti-reflective glass has heat insulation and sun protection effects. Preferably, the total solar energy transmittance TTS is less than or equal to 20%, more preferably less than or equal to 16%, and even less than or equal to 13%, thereby greatly improving the thermal comfort inside the vehicle. The infrared reflecting coating may include one functional layer, or two, three, four or even more functional layers. The material of the functional layer is a metal or metal alloy selected from at least one element of silver (Ag), gold (Au), copper (Cu), aluminum (Al), and platinum (Pt). For specific examples, the material of the functional layer includes one silver layer, includes two silver layers, includes three silver layers, or includes four silver layers. The dielectric layer functions both to protect the functional layer, preventing the functional layer from being damaged during processing or use, and to adjust the optical properties, mechanical properties, and reflection color of the infrared reflecting coating. The material of the dielectric layer may be at least one selected from nitrides, oxides, and oxynitrides of group A elements. Group A elements are selected from at least one element of zinc (Zn), tin (Sn), titanium (Ti), silicon (Si), Al, nickel (Ni), chromium (Cr), niobium (Nb), magnesium (Mg), zirconium (Zr), gallium (Ga), yttrium (Y), indium (In), antimony (Sb), vanadium (V), and tantalum (Ta). Examples of dielectric layer materials include zinc tin oxide (ZnSnOx), titanium oxide (TiOx), silicon nitride (SiNx), etc. The infrared barrier coating may also be an infrared absorbing coating. The infrared absorbing coating has an absorption effect on light in the wavelength range of 780 nm to 2500 nm. The infrared absorbing coating may be a thermoplastic resin coating containing heat insulation particles, such as PVB containing cesium-doped tungsten oxide (CWO) particles, PVB containing indium tin oxide (ITO) particles, etc. The heat insulation particles may be metal oxide particles with high infrared shielding function, such as ITO particles, aluminum-doped tin oxide particles, antimony-doped tin oxide (ATO) particles, gallium-doped zinc oxide (GZO) particles, indium-doped zinc oxide (IZO) particles, aluminum-doped zinc oxide (AZO) particles, niobium-doped titanium oxide particles, sodium-doped tungsten oxide particles, CWO particles, thallium-doped tungsten oxide particles, rubidium-doped tungsten oxide particles, tin-doped zinc oxide particles, silicon-doped zinc oxide particles, etc. From the perspective of further improving the heat insulation performance of the infrared absorbing coating, ITO particles or CWO particles are preferred.

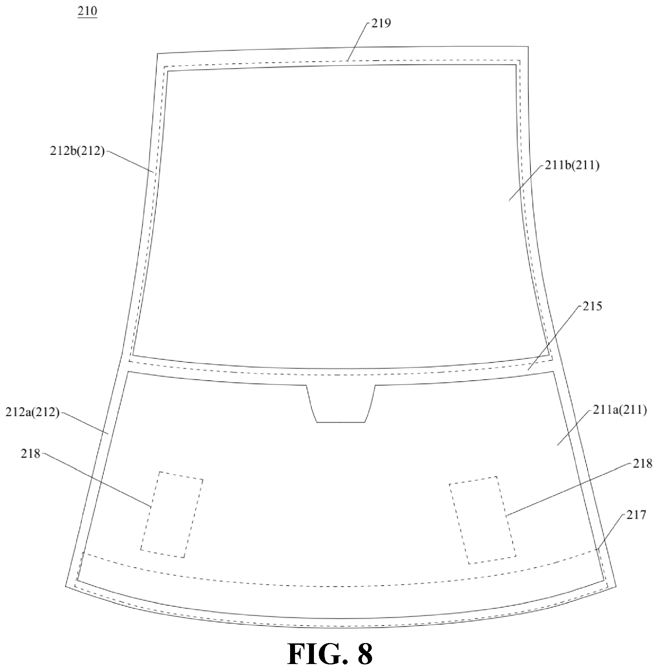

Reference can be made to FIG. 8, which is a schematic planar structural view of a windshield 210 in a vehicle provided in a second embodiment of the present disclosure.

The windshield 210 of the vehicle illustrated in this embodiment is different from the windshield 210 of the vehicle illustrated in the first embodiment described above in that, the windshield 210 is a panoramic windshield. In the windshield 210, there are two viewing areas 211 and two non-viewing areas 212. The two viewing areas 211 are respectively a first viewing area 211a and a second viewing area 211b. The primary viewing region 213 is located within the first viewing area 211a. The second viewing area 211b is located on the top side of the first viewing area 211a. In the direction from the bottom side of the windshield 210 to the top side of the windshield 210, the first viewing area 211a has a first curvature, the second viewing area 211b has a second curvature, and the first curvature is not equal to the second curvature. The first viewing area 211a is connected to the second viewing area 211b through a transition region with a third curvature. The third curvature is greater than each of the first curvature and the second curvature. For the description of the first viewing area 211a, reference may be made to the relevant description of the viewing area 211 in the above embodiment.

The two non-viewing areas 212 are respectively a first non-viewing area 212a and a second non-viewing area 212b. For the description of the first non-viewing area 212a, reference may be made to the relevant description of the non-viewing area 212 in the above embodiment. The second non-viewing area 212b is located on one side of the second non-viewing region 215 away from the first non-viewing region 214, and is arranged around the second viewing area 211b.

In addition, for the descriptions of the first head-up display region 217 and the second head-up display region 218, reference may be made to the relevant descriptions of the first head-up display region 217 and the second head-up display region 218 in the above embodiment respectively. In this embodiment, there is only one sunshade region 219, the sunshade region 219 is located on one side of the second masking portion away from the primary viewing region 213 and covers the second viewing area 211b, and an edge part of the sunshade region 219 overlaps with the second non-viewing area 212b. There is only one sunshade member, and the sunshade member is located within the sunshade region 219. For the relevant description of the sunshade member, reference may be made to the relevant description of the sunshade member in the above embodiment, and details are not repeated here.

For the windshield 210 illustrated in the present disclosure, the first head-up display region 217 is used as the display background to replace the black band used as the display background in the related art, and the dimming element 40 can adjust the visible light transmittance of the first head-up display region 217, so that the first head-up display region 217 can be switched between the dark state and the transparent state. When the head-up display function of the first head-up display region 217 is activated, for example, when the vehicle 1000 is moving, the dimming element 40 can adjust the visible light transmittance of the first head-up display region 217 to be less than or equal to 5%, the first head-up display region 217 is in the dark state, so that the first head-up display region 217 can serve as the display background of the head-up display. Therefore, the first head-up display region 217 in the dark state can provide a high contrast for the display image, thereby ensuring the sharpness of the display image. When the head-up display function of the first head-up display region 217 is deactivated, for example, when the vehicle 1000 is parked, the dimming element 40 can adjust the visible light transmittance of the first head-up display region 217 to be greater than or equal to 70%, and the first head-up display region 217 is in the transparent state. Therefore, the windshield 210 can not only provide a complete view for the driver and passengers, but also not affect the appearance aesthetics of the vehicle 1000. In other words, in this embodiment, by using the first head-up display region 217 to replace the black band in the related art as the display background for the head-up display, the limitation of the head-up display on the field of view of the driver can be avoided, a wider field of view can be provided for the driver, and judgment of the distance in front of the vehicle made by the driver is not affected, thereby ensuring the driving reliability of the vehicle 1000 and also improving the appearance aesthetics of the vehicle 1000.

The embodiments of the present disclosure are described in detail above. Specific examples are used in this specification to describe the principle and implementations of the present disclosure. The description of the embodiments is only used to help understand the method and core ideas of the present disclosure. Meanwhile, those of ordinary skill in the art may make modifications to the specific implementations and application scopes according to the idea of the present disclosure. In conclusion, the content of the specification shall not be construed as a limitation to the present disclosure.

## Claims

1. A windshield, wherein the windshield has a primary viewing region and a first head-up display region, a visible light transmittance of the primary viewing region is greater than or equal to 70%, the first head-up display region is located on a bottom side of the primary viewing region, the windshield comprises outer glass, inner glass, an interlayer, and a dimming element, the inner glass is spaced apart from and opposite to the outer glass, the interlayer and the dimming element are both located between the inner glass and the outer glass, the interlayer is connected between the inner glass and the outer glass, the first head-up display region is located in a region where the dimming element is located, the dimming element is configured to adjust a visible light transmittance of the first head-up display region, and an adjustment range of the visible light transmittance of the first head-up display region has an upper limit greater than or equal to 50%, and a lower limit less than or equal to 10%.

2. The windshield of claim 1, wherein the adjustment range of the visible light transmittance of the first head-up display region has the upper limit greater than or equal to 70%, and the lower limit less than or equal to 5%.

3. The windshield of claim 1 or 2, wherein the windshield further comprises a masking layer, the masking layer comprises a first masking portion located at a bottom edge of the windshield, and the first head-up display region is located on one side of the first masking portion closer to the primary viewing region.

4. The windshield of claim 3, wherein the first masking portion has a height less than or equal to 200 mm in a direction from a bottom side of the windshield toward a top side of the windshield.

5. The windshield of claim 1, wherein the first head-up display region has a height less than or equal to 300 mm in a direction from a bottom side of the windshield toward a top side of the windshield.

6. The windshield of claim 1, wherein the windshield further comprises a P-polarized light enhanced reflection coating, the P-polarized light enhanced reflection coating is disposed on a surface of the inner glass facing away from the outer glass, and the P-polarized light enhanced reflection coating at least partially covers the first head-up display region.

7. The windshield of claim 1, wherein the windshield further comprises a functional coating layer, and the functional coating layer is disposed on a surface of the outer glass facing toward the inner glass or a surface of the inner glass facing toward the outer glass.

8. The windshield of claim 1, wherein the windshield further has a sunshade region, the sunshade region is located on a top side of the primary viewing region, the windshield further comprises a sunshade member, and the sunshade member is located between the inner glass and the outer glass and in the sunshade region.

9. The windshield of claim 8, wherein the sunshade member is a dimming element, the sunshade member is configured to adjust a visible light transmittance of the sunshade region, and an adjustment range of the visible light transmittance of the sunshade region has an upper limit greater than or equal to 50%, and a lower limit less than or equal to 10%.

10. The windshield of claim 9, wherein a difference between the upper limit of the adjustment range of the visible light transmittance of the sunshade region and the upper limit of the adjustment range of the visible light transmittance of the first head-up display region is less than or equal to 5%, and a difference between the lower limit of the adjustment range of the visible light transmittance of the sunshade region and the lower limit of the adjustment range of the visible light transmittance of the first head-up display region is less than or equal to 5%.

11. The windshield of any one of claims 8 to 10, wherein the windshield further comprises a masking layer located at an edge of the windshield, the masking layer comprises a second masking portion located on the top side of the primary viewing region, and the sunshade region is located on one side of the second masking portion close to the primary viewing region and/or another side of the second masking portion away from the primary viewing region.

12. The windshield of any one of claims 8 to 10, wherein a minimum distance between the sunshade region and the primary viewing region is greater than or equal to 10 mm.

13. The windshield of claim 1, wherein the windshield is a panoramic windshield, the windshield comprises a first viewing area and a second viewing area, the primary viewing region is located in the first viewing area, and the second viewing area is located on a top side of the first viewing area; and in a direction from a bottom side of the windshield toward a top side of the windshield, the first viewing area has a first curvature, the second viewing area has a second curvature, the first curvature is not equal to the second curvature, the first viewing area is connected to the second viewing area through a transition region with a third curvature, and the third curvature is greater than each of the first curvature and the second curvature.

14. The windshield of claim 1, wherein the interlayer comprises a first head-up display portion, the first head-up display portion is located in the first head-up display region, and in a direction from a bottom side of the windshield toward a top side of the windshield, the thickness of the first head-up display portion gradually decreases.

15. A head-up display system, wherein the head-up display system comprises a projection apparatus and the windshield of any one of claims 1 to 14, the projection apparatus is located on one side of the inner glass facing away from the outer glass, the projection apparatus is configured to emit first projection light toward the first head-up display region, and the first projection light is reflected on a surface of the inner glass to form a virtual first projection image on one side of the outer glass facing away from the inner glass.

16. The head-up display system of claim 15, wherein a top edge of the first projection image is located below a bottom edge of the primary viewing region.

17. The head-up display system of claim 15 or 16, wherein a projection distance of the first head-up display region is greater than or equal to 1 m and less than or equal to 2.5 m.

18. The head-up display system of claim 15, wherein projection light of the projection apparatus comprises S-polarized light and P-polarized light.

19. The head-up display system of claim 18, wherein in the projection light of the projection apparatus, the S-polarized light accounts for 0% to 80%, and the P-polarized light accounts for 20% to 100%.

20. The head-up display system of claim 15, wherein a projection angle of the projection apparatus ranges from 42 degrees to 85 degrees.

21. The head-up display system of claim 15, wherein the windshield further has a second head-up display region, the second head-up display region is located in the primary viewing region, the projection apparatus is further configured to emit second projection light toward the second head-up display region, and the second projection light is reflected on the surface of the inner glass to form a virtual second projection image on the side of the outer glass facing away from the inner glass.

22. The head-up display system of claim 21, wherein a proportion of P-polarized light in the second projection light is different from a proportion of P-polarized light in the first projection light.

23. The head-up display system of claim 21 or 22, wherein a projection distance of the second head-up display region is greater than or equal to 5 m and less than or equal to 10 m.

24. The head-up display system of claim 21 or 22, wherein the projection apparatus is configured to provide color compensation for color of projection light, and a color compensation value of the projection light of the projection apparatus is equal to a color deviation value of light reflected on the surface of the inner glass.

25. A vehicle, wherein the vehicle comprises a vehicle body and the head-up display system of any one of claims 15 to 24, and the head-up display system is mounted on the vehicle body.
